Europäisches Patentamt

European Patent Office

Office européen des brevets

(19)

(11) Numéro de publication : **0 216 687**
**B1**

(12) **FASCICULE DE BREVET EUROPÉEN**

(45) Date de publication du fascicule du brevet :
09.08.89

(51) Int. Cl.⁴ : **C 22 B 59/00, C 01 F 17/00**

(21) Numéro de dépôt : **86401960.9**

(22) Date de dépôt : **08.09.86**

(54) **Procédé de traitement de minerais de terres rares.**

(30) Priorité : **10.09.85 FR 8513382**

(43) Date de publication de la demande :
**01.04.87 Bulletin 87/14**

(45) Mention de la délivrance du brevet :
**09.08.89 Bulletin 89/32**

(84) Etats contractants désignés :
**AT BE CH DE FR GB IT LI LU NL SE**

(56) Documents cités :
**FR–A– 995 112**
**GB–A– 2 102 402**
**US–A– 2 811 411**
**GMELIN HANDBUCH DER ANORGANISCHEN CHE-**
**MIE, Seltenerdelemente, Teil B1, System - Nummer**
**39, 1976, Springerverlag, Berlin, DE**

(73) Titulaire : **RHONE-POULENC CHIMIE**
**25, quai Paul Doumer**
**F-92408 Courbevoie Cédex (FR)**

(72) Inventeur : **Fabre, Frédéric**
**10, rue Louis Blanc**
**F-75010 Paris (FR)**
Inventeur : **Tognet, Jean-Paul**
**2, allée du Mail**
**F-17000 La Rochelle (FR)**
Inventeur : **Magnier, Claude**
**3, rue des Chaufourniers**
**F-75019 Paris (FR)**

(74) Mandataire : **Dutruc-Rosset, Marie-Claude et al**
**RHONE-POULENC INTERSERVICES Service Brevets**
**Chimie 25, Quai Paul Doumer**
**F-92408 Courbevoie Cédex (FR)**

EP 0 216 687 B1

Jouve, 18, rue St-Denis, 75001 Paris, France

**Description**

La présente invention concerne un procédé de traitement de minerais de terres rares. Elle concerne plus particulièrmeent un perfectionnement aux procédés de traitement de minerais de terres rares par un hydroxyde de métal alcalin en vue d'obtenir des hydroxydes de terres rares. L'invention vise plus particulièrement le traitement desdits minerais effectué à l'aide d'hydroxyde de sodium.

Les procédés antérieurs consistent d'une manière générale à effectuer un broyage très poussé à sec ou dans l'eau d'un minerai de terres rares tel que la monazite puis à traiter le minerai broyé par une solution aqueuse concentrée d'hydroxyde de sodium à température élevée. Par exemple le brevet US-2 811 411 décrit un procédé dans lequel on effectue un broyage tel que dans le minerai broyé, 100 % des grains passent à travers un tamis de maille 74 μm et 95 à 98 % à travers un tamis de maille 44 μm. Ce brevet indique que l'attaque par l'hydroxyde de sodium est plus complète et le temps de réaction plus court si le minerai est broyé plus finement. Le minerai broyé est ensuite traité par une solution d'hydroxyde de sodium ayant une concentration de 30 à 70 % en poids, à des températures de 135 à 220 °C pendant des durées de 1 à 3 heures. Le rapport pondéral entre l'hydroxyde de sodium et le minerai est de 2 à 3.

Ces procédés présentent l'inconvénient de nécessiter un broyage très poussé du minerai et donc une dépense énergétique importante.

En outre dans le cas d'un broyage à sec la finesse du broyage entraîne une production de poussières très fines et difficilement récupérables. Les pertes sont inévitables et ces poussières présentent l'inconvénient d'être radioactives, comme le minerai. Le procédé est donc peu satisfaisant d'un point de vue à la fois économique (pertes de poussières c'est-à-dire de minerai broyé) et écologique (radioactivité des poussières).

Dans le cas d'un broyage dans l'eau, la pulpe, à la sortie du broyeur est diluée. Or l'attaque ultérieure par l'hydroxyde de sodium doit avoir lieu en milieu concentré. Il faut donc décanter la pulpe pour enlever après broyage le plus d'eau possible. Il faut donc un décanteur ou un filtre (investissement plus élevé). La pulpe décantée contient le plus souvent entre 25 et 40 % d'eau. Cela nécessite lors de l'étape ultérieure, l'emploi d'une quantité importante de soude en écailles qui est chère, pour atteindre la concentration en soude souhaitée.

Enfin la finesse du broyage utilisée dans les procédés connus impose des temps de broyage élevés.

G.A. Meerson et Li Man Khek (Russ. Met. 1967,1,20) ont par ailleurs décrit une étude expérimentale de traitement de la monazite qui consiste à effectuer simultanément le broyage et l'attaque par l'hydroxyde de sodium dans un broyeur à boulets de laboratoire à une température de 175-200 °C, avec une solution d'hydroxyde de sodium à 40 % ou 50 % qui est présente en une quantité représentant 135 % à 150 % de la stoechiométrie. La durée de traitement avec de l'hydroxyde de sodium à 50 % présent en une quantité représentant 150 % de la stoechiométrie a été de 4, 5 à 6 heures à 175 °C et 3 h à 3 h 15 mn à 200 °C. Un tel procédé n'est pas transposable au stade industriel. On ne dispose pas en effet de broyeur industriel pouvant résister longtemps à de telles conditions.

La Demanderesse a découvert un procédé qui permet de remédier aux inconvénients des procédés industriels précités et ceci dans des conditions beaucoup plus avantageuses tant sur le plan écologique que sur le plan économique et qui présente de plus, l'avantage de faciliter l'attaque ultérieure du minerai de terres rares.

Ce procédé permet en outre une mise en œuvre industrielle à l'aide d'appareils et de matériaux couramment utilisés, contrairement à la technique décrite par G. A. Meerson et Li Man Khek.

La présente invention a ainsi pour objet un procédé de traitement d'un minerai de terres rares comprenant une première étape consistant en un broyage de ce minerai, puis une deuxième étape consistant en une attaque du minerai broyé par une solution aqueuse concentrée d'hydroxyde de métal alcalin à température élevée, caractérisé en ce que l'on effectue le broyage en présence d'une solution aqueuse concentrée d'hydroxyde de métal alcalin, à une température inférieure ou égale à 100 °C.

Selon le procédé de l'invention, le minerai de terres rares est broyé en présence d'un hydroxyde de métal alcalin tel que l'hydroxyde de sodium, l'hydroxyde de potassium ou leurs mélanges.

On met en œuvre, préférentiellement, la soude.

Dans l'exposé qui suit de l'invention, on définit, ci-après, les quantités et les concentrations de soudes mises en œuvre qui peuvent être aisément extrapolées par l'homme de l'art dans le cas où la soude est remplacée par un autre hydroxyde de métal alcalin.

Les minerais de terres rares intervenant dans le procédé de l'invention sont tous les minerais qui peuvent être traités à l'aide d'un hydroxyde de métal alcalin. Ainsi, on traitera en particulier les phosphates contenant des terres rares notamment la monazite et le xénotime et les fluocarbonates contenant des terres rares tels que, par exemple, la bastnaesite ainsi que leurs mélanges, par exemple, monazite, bastnaesite.

On entend par terres rares, selon l'invention, les éléments de la classification périodique dont le numéro atomique va de 57 à 71 et l'Yttrium ayant le numéro atomique 39. Les minerais de terres rares traités selon le procédé de l'invention peuvent contenir ces éléments selon des teneurs extrêmement variables.

Dans le procédé selon l'invention, le broyage du minerai dans une solution concentrée d'hydroxyde de métal alcalin peut s'effectuer par n'importe quel moyen et, par exemple, à l'aide d'un broyeur à barres ou à boulets, tournant ou vibrant.

Dans la présente invention, on entend par solution aqueuse concentrée d'hydroxyde de sodium, des solutions aqueuses ayant des concentrations en hydroxyde de sodium de 30 à 70 % en poids. Pour l'étape de broyage, ces concentrations sont avantageusement de 35 à 60 % en poids et de préférence de 45 à 50 % en poids. Une lessive de soude du commerce à 48 %-50 % en poids convient particulièrement bien.

Le rapport pondéral hydroxyde de sodium/minerai utilisé pour l'étape de broyage est, selon une première variante de l'invention, de 0,1 à 2,5 et de préférence de 0,5 à 1. Selon une seconde variante de l'invention, ce rapport est de 0,1 à 1 et de préférence de 0,2 à 0,5. La première variante correspond à la mise en œuvre de tout l'hydroxyde de sodium nécessaire à la réaction ultérieure complète désirée dès l'étape de broyage. La seconde variante correspond à la mise en œuvre, dans l'étape de broyage, d'une partie seulement de l'hydroxyde de sodium total nécessaire à la réaction ultérieure désirée, la partie complémentaire étant ajoutée dans l'étape ultérieure dite « d'attaque ». De préférence, la quantité d'hydroxyde de sodium ajoutée au total dans les 2 étapes est telle que le rapport pondéral hydroxyde de sodium/minerai soit inférieur à 1 et encore plus préférentiellement inférieur ou égal à 0,95 et supérieur ou égal à 0,80.

La température de l'étape de broyage peut atteindre 90° à 100 °C environ ; il est toutefois préférable d'opérer à une température inférieure ou égale à 60 °C. A cet effet, on peut refroidir par exemple le broyeur par arrosage avec de l'eau, ou utiliser un broyeur à double-enveloppe dans laquelle circule un fluide de refroidissement.

Le broyage du minerai réalisé en circuit ouvert est effectué avantageusement jusqu'à une dimension de particules telle, que leur refus au tamis de 40 μm soit inférieur ou égal à 40 % en poids. Des résultats particulièrement satisfaisants sont obtenus lorsque la dimension de ces particules est telle que leur refus au tamis de 40 μm soit inférieur ou égal à 20 %.

La durée de broyage varie généralement entre 30 mn et 2 h.

Le minerai ainsi broyé est ensuite traité à chaud par une solution aqueuse concentrée d'hydroxyde de sodium conduisant à une pulpe. Les conditions de traitement peuvent être les conditions des procédés connus. Ainsi la température peut varier de 100 à 220 °C, de préférence de 130 à 180 °C et la pression peut varier de la pression atmosphérique à $3.10^6$ Pa. La durée qui est fonction de la température et de la pression peut varier de 1 à 10 h. En outre une agitation énergique du milieu réactionnel est nécessaire au cours de cette étape d'attaque.

Après cette attaque, il est connu que la pulpe est diluée à l'eau et que les hydroxydes de terres rares sont ensuite séparés de la solution d'hydroxyde de sodium et de phosphate de sodium dans le cas du traitement de monazite et de fluorure et carbonate de sodium dans le cas du traitement de bastnaesite.

Un autre mode de réalisation de l'invention consiste à effectuer dans une première étape, un broyage ménagé du minerai et, après son attaque et dilution du milieu réactionnel et avant séparation des hydroxydes de terres rares, à réaliser une sélection granulométrique des grains de minerai afin de recycler les plus gros, partiellement attaqués, à l'étape de broyage.

Les quantités d'hydroxyde de sodium mises en œuvre et la température restent identiques à celles décrites précédemment.

Par broyage ménagé, on entend un broyage du minerai qui est effectué jusqu'à une dimension de particules telle que leur refus au tamis de 40 μm est supérieur à 20 %.

La durée du broyage est généralement plus courte et varie entre 15 mn et 1 h 30 mn.

Selon ce mode d'exécution de l'invention, on recycle les grains, les plus gros, partiellement attaqués : la dimension de coupure granulométrique est choisie aux environs de 10 à 100 μm, de préférence 10 à 40 μm. Les grains les plus fins sont envoyés à l'étape de séparation des hydroxydes de terres rares. Il est à noter que cette sélection granulométrique ne peut avoir lieu qu'après dilution de la pulpe obtenue après attaque. Cette opération est faite avantageusement dans un hydroséparateur, de préférence, un hydrocyclone.

Par rapport aux procédés connus, le procédé selon l'invention permet d'économiser de l'énergie grâce à la possibilité de broyer le minerai jusqu'à des dimensions de particules plus importantes et donc d'avoir des temps de broyage plus courts.

Le procédé selon l'invention permet par ailleurs :

d'éviter toute pollution par des poussières radioactives,

de ne pas diluer le minerai dans l'eau avant l'étape suivante d'attaque dans la soude concentrée. Cela permet d'utiliser pour l'étape ultérieure essentiellement de la lessive commerciale de soude à 48-50 % beaucoup plus économique que la soude anhydre. Il est à noter que dans le cas d'un broyage ménagé, la dilution éventuelle apportée par le recyclage des grains, les plus gros, restent néanmoins beaucoup plus faible que lors d'un broyage du minerai dans l'eau, de plus ce mode d'exécution présente l'avantage de réduire notablement la durée du broyage.

Enfin et c'est un des points les plus importants, la Demanderesse a découvert que ce mode de broyage rend le minerai plus réactif pour l'étape suivante d'attaque. Ainsi ce procédé permet de plus de réaliser une préattaque du minerai. Ce taux d'attaque varie, dans les conditions du procédé, entre 5 et 20 % (par comparison : à 110 °C, une monazite préalablement broyée à 100 % < 40 μm n'est attaquée à 15 % qu'après une dizaine d'heures d'agitation intense. Cela montre l'intérêt et la spécificité du broyage dans la soude).

Le procédé selon l'invention permet donc de rendre le minerai plus réactif et d'obtenir lors de l'étape ultérieure d'attaque des rendements plus élevés et ceci pour des dépenses énergétiques lors du broyage bien moindre (granulométrie nécessaire moins fine et temps de broyage plus courts).

De plus, le procédé selon l'invention permet une économie globale substantielle en hydroxyde de sodium par rapport aux procédés connus. Ainsi le rapport pondéral hydroxyde de sodium total/minerai peut être inférieur à 1 et même inférieur ou égal à 0,95 alors que par exemple dans le procédé décrit dans le brevet US-A-2 811 411 ce rapport est de 2 à 3.

Les exemples suivants illustrent la présente invention :

Exemple 1

Une monazite malaise dont la composition est donnée par le tableau suivant :

| CONSTITUANTS | POURCENTAGE EN POIDS |
|---|---|
| $ThO_2$ | 6,8 % |
| Oxydes de terres rares | 59,7 % |
| $P_2O_5$ | 27,1 % |
| $SiO_2$ | 1,9 % |
| $ZrO_2$ | 0,7 % |
| $TiO_2$ | 0,8 % |

est broyée parallèlement à sec et dans la soude.

Le broyage à sec s'effectue en continu dans un broyeur à boulets fonctionnant en circuit fermé sur un sélecteur à air.

Le broyage dans la soude s'effectue en continu, dans un broyeur à boulets fonctionnant en circuit ouvert. La durée du broyage (temps de séjour moyen du minerai dans le broyeur) est de 1 h 30 mn. Le broyeur est maintenu à une température de 60 °C sous la pression atmosphérique.

L'énergie dépensée est de 95 kWh/T minerai dans le premier cas et seulement de 35 kWh/T dans le second.

A l'issue du broyage, le minerai issu du broyage à sec et la pulpe issue du broyage dans la soude alimentent chacun un réacteur d'attaque.

L'étape d'attaque est menée dans les deux cas dans des conditions strictement identiques :

durée d'attaque identique

pression atmosphérique

température 147 °C

quantité globale de soude utilisée identique.

La soude utilisée est de la lessive commerciale de soude initialement à 48 % en poids.

La quantité globale de soude utilisée est telle que le rapport pondéral soude/minerai est égal à 0,85 (pour 1 T de minerai, 850 kg de soude pure à 100 %).

Pour le minerai broyé à sec, toute la soude est ajoutée lors de l'étape d'attaque.

Pour le procédé selon l'invention, la moitié de la soude est introduite avec le minerai dans le broyeur, le complément étant ajouté à la sortie du broyeur juste avant l'attaque.

A la fin du broyage dans la soude selon l'invention, le taux d'attaque du minerai est de 6 % en poids.

Les résultats sont les suivants :

| | | Broyage à sec | Broyage dans la soude |
|---|---|---|---|
| Granulométrie du minerai après broyage | >63 μm | 0 % | 5 % |
| | >40 μm | 6 % | 11 % |
| Rendement d'attaque des terres rares | | 91 % | 96,3 % |

Exemple 2

Un essai identique à celui effectué à l'Exemple 1 est réalisé sur une monazite australienne dont la composition est donnée dans le tableau suivant.

| CONSTITUANTS | POURCENTAGE EN POIDS |
|---|---|
| $ThO_2$ | 7,3 % |
| Oxydes de terres rares | 58,9 % |
| $P_2O_5$ | 28,0 % |
| $SiO_2$ | 1,1 % |
| $ZrO_2$ | 1,9 % |
| $TiO_2$ | 0,41% |

Les résultats sont les suivants :

| | | Broyage à sec | Broyage dans la soude |
|---|---|---|---|
| Granulométrie | > 80 µm | 0 % | 2,9 % |
| du minerai | > 63 µm | 0 % | 6 % |
| après broyage | > 40 µm | 0 % | 14,4 % |
| Rendement d'attaque des terres rares | | 95,2 % | 97,7 % |

**Revendications**

1. Procédé de traitement d'un minerai comprenant des lanthanides et de l'yttrium qui consiste dans une première étape à broyer ledit minerai, dans une deuxième étape à attaquer le minerai broyé par une solution aqueuse concentrée d'hydroxyde de métal alcalin à température élevée, caractérisé en ce que l'on effectue le broyage en présence d'une solution aqueuse concentrée d'hydroxyde de métal alcalin, à une température inférieure ou égale à 100 °C.

2. Procédé selon la revendication 1, caractérisé en ce que l'hydroxyde de métal alcalin est l'hydroxyde de sodium.

3. Procédé selon la revendication 2, caractérisé en ce que l'on met en œuvre à l'étape du broyage, tout l'hydroxyde de sodium nécessaire à la réaction, en quantité telle que le rapport pondéral hydroxyde de sodium/minerai varie de 0,1 à 2,5.

4. Procédé selon la revendication 3, caractrérisé en ce que ledit rapport varie de 0,5 à 1.

5. Procédé selon la revendication 2, caractérisé en ce que l'on met en œuvre à l'étape de broyage, une partie seulement de l'hydroxyde de sodium nécessaire à la réaction, en quantité telle que le rapport pondéral hydroxyde de sodium/minerai varie de 0,1 à 1.

6. Procédé selon la revendication 5, caractérisé en ce que ledit rapport varie de 0,2 à 0,5.

7. Procédé selon l'une des revendications 2 à 6, caractérisé en ce que la quantité d'hydroxyde de sodium ajoutée au total dans les deux étapes broyage et attaque est telle que le rapport pondéral hydroxyde de sodium/minerai soit inférieur à 1.

8. Procédé selon la revendication 7, caractérisé en ce que la quantité d'hydroxyde de sodium ajoutée au total dans les étapes broyage et attaque est telle que le rapport pondéral hydroxyde de sodium/minerai soit inférieur ou égal à 0,95 et supérieur ou égal à 0,80.

9. Procédé selon l'une quelconque des revendications 2 à 8, caractérisé en ce que l'on effectue le broyage en présence d'une solution aqueuse contenant de 45 à 50 % en poids d'hydroxyde de sodium.

10. Procédé selon l'une quelconque des revendications précédentes 1 à 9, caractérisé en ce que le broyage est effectué à une température inférieure ou égale à 60 °C.

11. Procédé selon l'une quelconque des revendications précédentes 1 à 10, caractérisé en ce que le broyage du minerai en circuit ouvert est effectué jusqu'à une dimension de particules telle que leur refus au tamis de 40 μm soit inférieur ou égal à 40 %.

12. Procédé selon la revendication 11, caractérisé en ce que le refus au tamis de 40 μm est inférieur ou égal à 20 %.

13. Procédé selon l'une des revendications 11 et 12, caractérisé en ce que la durée du broyage varie entre 30 mn et 2 h.

14. Procédé selon l'une quelconque des revendicaitons précédentes 1 à 13, caractérisé en ce que la température mise en œuvre dans la deuxième étape est comprise entre 130 et 180 °C.

15. Procédé selon l'une quelconque des revendications 1 à 10 et 14, caractérisé en ce que l'on effectue, dans une première étape, un broyage ménagé du minerai jusqu'à une dimension de particules telle que leur refus au tamis de 40 μm soit supérieur à 20 % et que, après son attaque et dilution du milieu réactionnel et avant séparation des hydroxydes de terres rares, on réalise une sélection granulométrique des grains de minerai afin de recycler les plus gros, partiellement attaqués, à l'étape de broyage.

16. Procédé selon la revendication 15, caractérisé en ce que la dimension de coupure granulométrique est choisie aux environs de 10 à 100 μm.

17. Procédé selon la revendication 16, caractérisé en ce que la dimension de coupure granulométrique est choisie de 10 à 40 μm.

18. Procédé selon l'une quelconque des revendications 15 à 17, caractérisé en ce que la durée de broyage varie entre 15 mn et 1 h 30 mn.

19. Procédé selon l'une des revendications 1 à 18, caractérisé en ce que le minerai de terres rares comprend des phosphates de terres rares, des fluocarbonates de terres rares ou leurs mélanges.

20. Procédé selon la revendication 19, caractérisé en ce que le minerai de terres rares est la monazite, le xénotime, la bastnaésite ou leur mélange.

21. Procédé selon la revendication 20, caractérisé en ce que le minerai de terres rares est la monazite.

## Claims

1. A method of treating an ore containing lanthanides and yttrium, including a first stage comprising grinding the ore, followed by a second stage comprising reacting the ground ore with a concentrated aqueous alkali metal hydroxide solution at an elevated temperature, characterised in that grinding is carried out in the presence of a concentrated aqueous alkali metal hydroxide solution at a temperature of up to 100 °C.

2. The method of Claim 1, characterized in that the alkali metal hydroxide is sodium hydroxide.

3. The method of Claim 2, characterised in that all the sodium hydroxide required for the reaction is used at the grinding stage, in a quantity such that the weight ratio of sodium hydroxide to ore ranges from 0.1 to 2.5.

4. The method of Claim 3, characterised in that said ratio ranges from 0.5 to 1.

5. The method of Claim 2, characterised in that only part of the sodium hydroxyde required for the reaction is used at the grinding stage, in a quantity such that the weight ratio of sodium hydroxide to ore ranges from 0.1 to 1.

6. The method of Claim 5, characterised in that said ratio ranges from 0.2 to 0.5.

7. The method of any of Claims 2 to 6, characterised in that the total quantity of sodium hydroxide added at both grinding and reaction stages is such that the weight ratio of sodium hydroxide to ore is less than 1.

8. The method of Claim 7, characterised in that the total quantity of sodium hydroxide added at the grinding and reaction stages is such that the weight ratio of sodium hydroxide to ore is up to 0.95 and at least 0.80.

9. The method of any of Claims 2 to 8, characterised in that grinding is carried out in the presence of an aqueous solution containing 45 to 50 % by weight of sodium hydroxide.

10. The method of any of Claims 1 to 9, characterised in that grinding is carried out at a temperature of up to 60 °C.

11. The method of any of Claims 1 to 10, characterised in that open circuit grinding of the ore is carried out to a particle size such that the residue left on a 40 micron sieve is not more than 40 %.

12. The method of Claim 11, characterised in that the residue left on a 40 micron sieve is not more than 20 %.

13. The method of Claim 11 or 12, characterised in that the grinding time ranges from 30 minutes to 2 hours.

14. The method of any of Claims 1 to 13, characterised in that the temperature used during the second stage is in the range from 130 to 180 °C.

15. The method of any of Claims 1 to 10 and 14, characterised in that carefully controlled grinding of the ore is carried out at the first stage, to a particle size such that the residue left on a 40 micron sieve is over 20 % and that, after the ore has been reacted and the reaction medium diluted and before the rare

6

earth metal hydroxides are separated, the ore particles are graded, so that the coarsest, partially reacted particles can be recycled to the grinding stage.

16. The method of Claim 15, characterised in that the particle size at which the cut is made is selected in the range of 10 to 100 microns.

17. The method of Claim 16, characterised in that the particle size at which the cut is made is selected in the region of 10 to 40 microns.

18. The method of any of Claims 15 to 17, characterised in that the grinding time ranges from 15 minutes to 1 hour 30 minutes.

19. The method of any of Claims 1 to 18, characterised in that the rare earth metal ore comprises rare earth metal phosphates, rare earth metal fluocarbonates or mixtures thereof.

20. The method of Claim 19, characterised in that the rare earth metal ore is monazite, xenotime, bastnasite or mixtures thereof.

21. The method of Claim 20, characterised in that the rare earth metal ore is monazite.

## Patentansprüche

1. Verfahren zur Behandlung eines Erzes enthaltend Lanthanide und Yttrium, das darin besteht, in einem ersten Schritt dieses Erz zu mahlen und in einem zweiten Schritt das gemahlene Erz mit einer konzentrierten wässrigen Lösung eines Hydroxids eines Alkalimetalls bei erhöhter Temperatur aufzuschliessen, dadurch gekennzeichnet, daß man das Mahlen in Gegenwart einer konzentrierten wässrigen Lösung von Alkalimetallhydroxid bei einer Temperatur unterhalb von oder gleich 100 °C durchführt.

2. Verfahren nach Anspruch 1, dadurch gekennzeichnet, daß das Alkalimetallhydroxid Natriumhydroxid ist.

3. Verfahren nach Anspruch 2, dadurch gekennzeichnet, daß man bei dem Mahlschritt das gesamte für die Reaktion erforderliche Natriumhydroxid einsetzt, in einer solchen Menge, daß das Gewichtsverhältnis Natriumhydroxid/Erz von 0,1 bis 2,5 variiert.

4. Verfahren nach Anspruch 3, dadurch gekennzeichnet, daß dieses Verhältnis von 0,5 bis 1 variiert.

5. Verfahren nach Anspruch 2, dadurch gekennzeichnet, daß man bei dem Mahlschritt nur einen Teil des für die Reaktion erforderlichen Natriumhydroxids einsetzt, in einer solchen Menge, daß das Gewichtsverhältnis Natriumhydroxid/Erz von 0,1 bis 1 variiert.

6. Verfahren nach Anspruch 5, dadurch gekennzeichnet, daß dieses Verhältnis von 0,2 bis 0,5 variiert.

7. Verfahren nach einem der Ansprüche 2 bis 6, dadurch gekennzeichnet, daß die Menge des insgesamt in den beiden Schritten Mahlen und Aufschluß zugegebenen Natriumhydroxids so gewählt ist, daß das Gewichtsverhältnis Natriumhydroxid/Erz unterhalb von 1 liegt.

8. Verfahren nach Anspruch 7, dadurch gekennzeichnet, daß die während der beiden Schritte Mahlen und Aufschluß insgesamt zugegebene Menge an Natriumhydroxid so gewählt ist, daß das Gewichtsverhältnis Natriumhydroxid/Erz kleiner oder gleich 0,95 ist und größer oder gleich 0,80.

9. Verfahren nach einem der Ansprüche 2 bis 8, dadurch gekennzeichnet, daß man das Mahlen in Gegenwart einer wässrigen Lösung enthaltend 45 bis 50 Gew.% an Natriumhydroxid vornimmt.

10. Verfahren nach einem der vorhergehenden Ansprüche 1 bis 9, dadurch gekennzeichnet, daß das Mahlen bei einer Temperatur unterhalb von oder gleich 60 °C durchgeführt wird.

11. Verfahren nach einem der vorhergehenden Ansprüche 1 bis 10, dadurch gekennzeichnet, daß das Mahlen des Erzes im offenen Kreislauf durchgeführt wird bis zu einer solchen Teilchengröße, daß deren Rückstand bei einem Sieb mit 40 μm kleiner oder gleich 40 % ist.

12. Verfahren nach Anspruch 11, dadurch gekennzeichnet, daß der Rückstand bei einem Sieb von 40 μm kleiner oder gleich 20 % ist.

13. Verfahren nach einem der Ansprüche 11 und 12, dadurch gekennzeichnet, daß die Dauer des Mahlens zwischen 30 Minuten und 2 Stunden variiert.

14. Verfahren nach einem der vorhergehenden Ansprüche 1 bis 13, dadurch gekennzeichnet, daß im zweiten Schritt die Temperatur zwischen 130 und 180 °C liegt.

15. Verfahren nach einem der Ansprüche 1 bis 10 und 14, dadurch gekennzeichnet, daß man in einem ersten Schritt ein schonendes Mahlen des Erzes bis auf eine solche Teilchengröße durchführt, daß der Rückstand bei einem Sieb mit 40 μm größer als 20 % ist und daß nach dessen Aufschluß und Verdünnen des Reaktionsmediums und vor Abtrennung der Hydroxide der Seltenen Erden eine Selektion hinsichtlich der Korngröße des Erzes durchführt, um die zu großen teilweise aufgeschlossenen Körner in den Mahlschritt zurückzuführen.

16. Verfahren nach Anspruch 15, dadurch gekennzeichnet, daß der Korngrößenschnitt zwischen etwa 10 und 100 μm gewählt wird.

17. Verfahren nach Anspruch 16, dadurch gekennzeichnet, daß der Korngrößenschnitt zwischen 10 und 40 μm gewählt wird.

18. Verfahren nach einem der Ansprüche 15 bis 17, dadurch gekennzeichnet, daß die Zeitdauer des Mahlens zwischen 15 Minuten und 1 Stunde 30 Minuten variiert.

19. Verfahren nach einem der Ansprüche 1 bis 18, dadurch gekennzeichnet, daß das Erz der Seltenen Erden Phosphate der Seltenen Erden, Fluorcarbonate der Seltenen Erden order deren Gemische enthält.

20. Verfahren nach Anspruch 19, dadurch gekennzeichnet, daß das Seltenerderz Monazit, Xenotim, Bastnaesit oder deren Gemisch ist.

21. Verfahren nach Anspruch 20, dadurch gekennzeichnet, daß das Seltenerderz Monazit ist.